# EUROPÄISCHE PATENTSCHRIFT

(11) **EP 3 504 148 B1**
(45) Veröffentlichungstag und Bekanntmachung des Hinweises auf die Patenterteilung: **13.05.2020**
(21) Anmeldenummer: 17772610.6
(22) Anmeldetag: 22.09.2017
(51) Int. Cl.: B66C 13/16, B66C 13/46, B66C 13/56, B66F 9/075, E02F 9/20, E02F 9/26, H04N 7/18

(54) **FERNSTEUER-EINRICHTUNG FÜR KRAN-, BAUMASCHINE UND/ODER FLURFÖRDERZEUG, UND SYSTEM UMFASSEND DIESE FERNSTEUER-EINRICHTUNG UND EINEN KRAN-, EINE BAUMASCHINE UND/ODER EIN FLURFÖRDERZEUG**
REMOTE CONTROL DEVICE FOR CRANE, CONSTRUCTION MACHINE AND/OR LIFT TRUCK, AND SYSTEM COMPRISING SAID REMOTE CONTROL DEVICE AND A CRANE, A CONSTRUCTION MACHINE AND/OR A LIFT TRUCK
DISPOSITIF DE TÉLÉCOMMANDE POUR GRUE, ENGIN DE CHANTIER ET/OU CHARIOT ÉLÉVATEUR, ET SYSTÈME COMPRENANT LEDIT DISPOSITIF DE TÉLÉCOMMANDE ET UNE GRUE, UN ENGIN DE CHANTIER ET/OU UN CHARIOT ÉLÉVATEUR

(30) Priorität: 26.10.2016 DE 102016012786
(43) Veröffentlichungstag der Anmeldung: 03.07.2019
(73) Patentinhaber: Liebherr-Werk Biberach GmbH, 88400 Biberach/Riß (DE)
(72) Erfinder: ALBRECHT, Benjamin, 88436 Oberessendorf (DE)
(74) Vertreter: Thoma, Michael
(86) Internationale Anmeldenummer: PCT/EP2017/001144
(87) Internationale Veröffentlichungsnummer: WO 2018/077459

(56) Entgegenhaltungen:
- DE-A1-102012 216 489
- DE-A1-102014 216 982
- JP-A- 2016 023 489
- KR-A- 20140 122 699
- US-A1- 2014 223 235

## Beschreibung

Die vorliegende Erfindung betrifft eine Fernsteuer-Einrichtung für einen Kran, eine Baumaschine und/oder ein Flurförderzeug, mit einem mobilen Endgerät in Form eines Tabletcomputers, der einen Bildschirm mit Touch-Screen-Funktion und zumindest ein Eingabemittel zum Eingeben von Steuerbefehlen in Form eines Touch-Screen-Anzeigemittels sowie eine Signalübertragungseinrichtung zum Übertragen der eingegebenen Steuerbefehle auf die Steuervorrichtung des Krans, der Baumaschine oder des Flurförderzeugs aufweist.

Die Schrift KR 10 2014 012 2699 A zeigt einen LKW mit einem Ladekran, dessen Steuervorrichtung per Bluetooth Statusinformationen auf einen Tablet-Computer überträgt, wobei der Tablet-Computer einerseits eine Darstellung des LKWs mit Ladekran anzeigt und andererseits die Eingabe von Steuerbefehlen erlaubt.

Eine Fernsteuereinrichtung für einen Kran in Form eines Tablets ist bspw. aus der Schrift DE 10 2014 216982 A1 bekannt. Um nicht gewollte Steuerbefehle durch unbeabsichtigtes Berühren der Touchscreen-Oberflläche zu vermeiden, wird darin vorgeschlagen, einen zusätzlichen Bestätigungsknopf zum Bestätigen von Steuerbefehlen zu verwenden, der durch einen zusätzlichen, an den Tabletcomputer andockbaren Hardwarebaustein realisiert ist. Bei der Verwendung eines Tabletcomputers als Fernsteuerung für einen Kran, eine Baumaschine oder einen Flurförderer stellt sich jedoch nicht nur das genannte Problem der unbeabsichtigten Steuerbefehle durch nicht gewolltes Berühren des Bildschirms, sondern vor allen Dingen auch eine komfortable, realitätsnahe Vermittlung der Steuerungsfunktionen, die dem Benutzer der Fernsteuerung ein intuitives, Kontrolle vermittelndes Steuerungsgefühl gibt.

Krane und ähnliche Großgeräte wie Bohrrammgeräte, Surface Miner oder Seilbagger sind in der Bedienung und Steuerung sehr komplex. Dabei ist nicht nur die Vielzahl der Steuerungsfunktionen und deren Zusammenwirken sowie die damit einhergehenden, in ihrer Gesamtheit recht komplexen Eingabemittel wie Joysticks, Fußpedale und Steuerungsschalter ein Problem, sondern auch die oft ungewohnten, maschinenspezifischen Reaktionen der Maschinenstruktur auf Bewegungen der Stellantriebe.

Fehlende Kranreaktionen und mangelnde Realitätsnähe im Allgemeinen sind dabei insbesondere bei der Fernsteuerung von Kranen und Baumaschinen bzw. Flurförderzeugen ein Problem, das den fernsteuernden Maschinenführer unsicher werden lässt. Wird beispielsweise ein Kran ferngesteuert, spürt der Fernbediener nicht die üblichen Kranreaktionen, die ihm bei direkter Steuerung in der Kranführerkabine intuitiv das Gefühl geben, richtig oder falsch gesteuert zu haben.

Um die Fernsteuerung realitätsnäher zu gestalten, wurde daher bereits angedacht, einen näherungsweise realistischen Steuerstand zu verwenden, der beispielsweise der Kranführerkabine eines jeweiligen Krantyps entsprechen und über dort vorgesehene Eingabemittel wie Joysticks, Pedale, Steuerschalter oder Touchscreens Steuerbefehle verfügen kann. Solche kranführerkabinenähnliche Fernsteuerungen sind jedoch ortsgebunden und erlauben es dem Kranführer nicht, bestimmte Aufgaben wie bspw. das Anschlagen des Lasthakens direkt vor Ort im Detail zu beobachten. Zudem ist es nicht möglich, den Standort zu wechseln, um je nach Aufgabe einen besseren Überblick zu haben.

Vor diesem Hintergrund sind an sich Fernsteuerungen mit einem mobilen Endgerät vorteilhaft, von dem aus der Kranführer Kranbewegungen an beliebigen Standorten steuern und überwachen kann. Solche mobilen Endgeräte in Form von Tablets, wie sie in der Schrift DE 10 2014 216982 A1 verwendet werden, sind bislang jedoch hinsichtlich des Steuerungskomforts verbesserungsfähig und werden den komplexen Steuerungsfunktionen von Kranen und ähnlichen Großgeräten bislang nicht wirklich gerecht.

Ein weiteres Fernsteuerungssystem für einen Kran ist aus der Schrift DE 10 2012 216 489 A1 bekannt, wobei diese vorbekannte Fernsteuerung für Arbeitsmaschinen unterschiedlicher Typen verwendbar sein soll. Dabei ist die Fernsteuerung mit einem Selektier-Mechanismus versehen, der es erlaubt, die Anzahl der Bedien- und Auswahlmenüs der Anzeige der Fernsteuerung zu reduzieren, je nachdem in welcher Konfiguration sich die angebundene Arbeitsmaschine befindet. Bei dieser Fernsteuerung fehlt es jedoch in der zuvor beschriebenen Weise an einer ausreichenden Realitätsnähe, die auch durch die Anpassung der Bedienmenüs an die jeweilige Arbeitsmaschine kaum verbessert wird.

Ein Kran-Simulator, der mit virtuellen Darstellungen der Kranumgebung arbeitet, ist beispielsweise aus der Schrift DE 10 2013 011 818 A1 bekannt. Dort ist eine Kranführerkabine als Steuerstand mit entsprechenden Eingabemitteln vorgesehen, wobei die Sichtfenster bzw. die Verglasung der nachgebildeten Kranführerkabine durch Bildschirme ersetzt sind, auf denen die virtuelle Darstellung der Kranumgebung angezeigt wird.

Hiervon ausgehend liegt der vorliegenden Erfindung die Aufgabe zugrunde, eine verbesserte Fernsteuer-Einrichtung mit einem Tabletcomputer der eingangs genannten Art zu schaffen, die Nachteile des Standes der Technik vermeidet und Letzteren in vorteilhafter Weise weiterbildet. Insbesondere soll eine realitätsnähere, komfortablere Fernsteuerung des Kran- bzw. Maschinenbetriebs erreicht werden, die dem komplexen Kran- bzw. Maschinenverhalten besser Rechnung trägt und die Fernsteuerbarkeit sicherer macht.

Erfindungsgemäß wird die genannte Aufgabe durch einen Fernsteuer-Einrichtung gemäß Anspruch 1 gelöst. Bevorzugte Ausgestaltungen der Erfindung sind Gegenstand der abhängigen Ansprüche.

Es wird also vorgeschlagen, den Bildschirm des Tabletcomputers nicht nur zum Eingeben und Anzeigen von Steuerbefehlen zu nutzen, sondern auch zur Darstellung von Ist- und/oder Soll-Bildern der Arbeitsumgebung der Maschine zu verwenden, sodass der Maschinenführer beim Eingeben von Steuerbefehlen über die Touchscreen-Funktion des Bildschirms gleichzeitig dort die Arbeitsumgebung beobachten kann. Erfindungsgemäß ist der Tabletcomputer der Fernsteuerung dazu konfiguriert, Bilddaten von einer Kamera und/oder digitale Daten aus einem Bauwerkdatenmodell, einem sogenannten BIM zu empfangen, anhand der empfangen Bilddaten der Kamera und/oder der digitalen Daten aus dem Bauwerkdatenmodell eine Darstellung der Maschinenumgebung und/oder eines Arbeitswerkzeugs der Maschine auf dem Bildschirm anzuzeigen, und das Eingabemittel zum Eingeben von Steuerbefehlen in Form des Touchscreen-Elements zumindest zeitweise gleichzeitig zu der Darstelllung der Maschinenumgebung und/oder des Arbeitswerkzeugs auf dem Bildschirm anzuzeigen. Der Bildschirm des Tabletcomputers dient also gleichzeitig als Monitor zum Beobachten der Arbeitsumgebung und/oder des Arbeitswerkzeugs der ferngesteuerten Maschine einerseits und als Steuerungspaneel zum Anzeigen und Eingeben von Steuerbefehlen andererseits. Hierdurch kann eine komfortablere und sichere Fernsteuerung erzielt werden, da dem Maschinenführer auch beim Betrachten der Eingabeoberfläche für die Steuerbefehle die Arbeitsumgebung, in der die fernzusteuernden Bewegungen auszuführen sind, dargestellt wird, ohne dass der Maschinenführer die Blicke dafür hin- und herwenden müsste.

Die genannten Eingabemittel zum Eingeben von Steuerbefehlen in Form eines Touchscreen-Anzeigeelements können hierbei vorteilhafterweise direkt in die Darstellung der Maschinenumgebung und/oder des Arbeitswerkzeugs nach Art einer überlagerten Darstellung eingeblendet werden, sodass das Touchscreen-Anzeigeelement sozusagen vor dem Hintergrund der dargestellten Arbeits- bzw. Maschinenumgebung auf dem Bildschirm des Tabletcomputers dargestellt wird. Dies kann bspw. dazu genutzt werden, um mittels entsprechender Symbole Verfahr- und/oder Stellbewegungsbefehle besonders plastisch darzustellen und hierdurch dem Maschinenführer eine intuitive Bedienung zu ermöglichen. Beispielsweise können in ein Bild, das den Lasthaken eines Krans darstellt, Verfahrpfeile in den möglichen Verfahrrichtungen - also bspw. Auf-Ab und Rechts-Links und Vor-Zurück - in Form von Pfeilen eingeblendet werden, die sich von dem dargestellten Lasthaken in die entsprechenden Richtungen weg erstrecken.

Alternativ oder zusätzlich zu solchen in das Bild der Arbeitsumgebung eingeblendeten Touchscreen-Anzeigeelementen ist es jedoch ebenfalls möglich, auf dem Bildschirm des Tabletcomputers die genannten Touchscreen-Anzeigeelemente zum Eingeben von Steuerbefehlen in einem separaten Fenster darzustellen, das bspw. permanent an einem Bildschirmrand angezeigt oder bei Bedarf nach Art eines Popup-Windows aufrufbar ist und sich über das Fenster der Bilddarstellung der Maschinenumgebung legt.

Vorteilhafterweise kann das auf dem Bildschirm des Tabletcomputers dargestellte Bild der Maschinenumgebung und/oder des Arbeitsbereichs und/oder des zu erstellenden Bauwerks und/oder des Arbeitswerkzeugs der Maschine auch eine virtuelle Darstellung umfassen, die anhand von Bauwerks- und/oder Baustellendaten aus einem Baustellendatenmodell generiert wird. Der Tabletcomputer kann hierzu ein grafisches Simulationsmodul zum Berechnen der virtuellen Darstellung aufweisen, wobei ein solches grafisches Simulationsmodul vorteilhafterweise mit einer Datenschnittstelle am Tabletcomputer zum Einspielen der Bauwerks- und/oder Baustellendaten verbunden sein kann. Eine Bildverarbeitungseinrichtung des Tabletcomputers kann zum Generieren und/oder Anpassen der virtuellen Darstellung der Maschinenumgebung und/oder des Bauwerks und/oder des Arbeitswerkzeugs in Abhängigkeit der eingespielten digitalen Daten aus dem Baustellendatenmodell aufweisen.

Vorteilhafterweise kann der Tabletcomputer hierbei als Datenschnittstelle eine CAD-Schnittstelle umfassen, mittels derer in den Tabletcomputer CAD-Daten einspielbar sind, anhand derer auf dem Bildschirm des Tabletcomputers durch das Simulationsmodul eine virtuelle Darstellung generierbar ist. Alternativ oder zusätzlich kann der Tabletcomputer eine Bilddatenschnittstelle umfassen, mittels derer digitale Bilddaten einspielbar sind, anhand derer dann von der genannten Bildverarbeitungseinrichtung die virtuelle Darstellung der Maschinenumgebung und/oder des Arbeitswerkzeugs und/oder des Bauwerks generiert werden kann.

Vorteilhafterweise können auf dem Bildschirm des Tabletcomputers aber nicht nur virtuelle Darstellungen angezeigt werden, sondern auch Ist-Bilder einer Kamera wiedergegeben werden. Um ein gleichermaßen realistisches wie informatives Bild anzuzeigen, anhand derer der fernsteuernde Maschinenführer die Maschine intuitiv kontrollieren kann, besitzt das mobile Endgerät in vorteilhafter Weiterbildung der Erfindung eine Anzeigesteuervorrichtung, mittels derer eine überlagerte Bildschirmdarstellung nach Art eines Virtual Reality-Bilds auf dem Bildschirm des Tabletcomputers generiert werden kann, das aus den empfangenen Bilddaten einer Kamera und den empfangenen digitalen Daten aus dem genannten Baustellendatenmodell BIM und somit aus einem Kamerabild der Maschinenumgebung einerseits und einer virtuellen Darstellung der Maschinenumgebung bzw. eines Bauwerkteils andererseits zusammengesetzt ist.

Bei einem solchen, zusammengesetzten Virtual Reality-Bild, das auf dem Bildschirm des Tabletcomputers angezeigt und ggfs. durch die zuvor erläuterten Touchscreen-Anzeigeelemente zum Eingeben von Steuerbefehlen angereichert wird, kann bspw. das von einer oder mehreren Kameras bereitgestellte Ist-Bild einer Baustelle durch Konturen eines erst noch zu erstellenden Bauwerks ergänzt werden, sodass der fernsteuernde Maschinenführer genau weiß, wohin ein jeweiliges Bauteil zu verfahren ist. Hierbei können auch im Ist-Bild bereits vorhandene Bauwerkskonturen und virtuelle Bauwerkskonturen, die dem nächsten Arbeitsschritt entsprechen, ergänzt werden, sodass auf dem Bildschirm des Tabletcomputers im dargestellten Ist-Bild die im nächsten Arbeitsschritt zu errichtende Kontur angezeigt wird.

Alternativ oder zusätzlich können bspw. auch in das Kamera-Ist-Bild der Arbeitsumgebung der zu steuernden Maschine bestimmte Positionen wie bspw. eine Anlieferungsstation für Bauteile, ein Lagerplatz für Komponenten oder Begrenzungen des zulässigen Arbeitsbereichs eingeblendet werden.

Die kameragenerierte Ist-Darstellung der Arbeitsumgebung der fernzusteuernden Maschine kann ein zyklisch aktualisiertes Bild, das nach Art einer Webcam bereitgestellt wrid, oder auch ein kontinuierlich gestreamtes Livebild sein.

Eine solche echte, kameragenerierte Darstellung der Maschinenumgebung und/oder des Arbeitswerkzeugs kann insbesondere in Form eines Livebilds bzw. fernsehbildartigen Videobilds erzeugt werden, wobei von der zumindest einen Kamera an der ferngesteuerten Maschine ein entsprechendes Videosignal zu dem entfernt angeordneten Tabletcomputer der Fernsteuereinrichtung übertragen und von seinem Bildschirm wiedergegeben wird.

Alternativ oder zusätzlich zu einer Video- oder Fernsehkamera kann auch mit anderen bildgebenden Sensoren gearbeitet werden, beispielsweise einem Infrarotsensor und/oder einem Radarsensor und/oder einem Fotomischdetektor und/oder einem Lichtlaufzeitsensor im Sinne eines sog. Time-of-Flight-Detektors, bei dem Messobjekte von Lichtimpulsen angeleuchtet und die Signallaufzeit gemessen wird, aufgrund derer dann die Entfernung zwischen Kamera und Objekt errechnet und ein dreidimensionales Bild erzeugt werden kann. Vorteilhafterweise können auch mehrere bildgebende Sensoren unterschiedlicher Bildgattung, beispielsweise eine Kamera in Verbindung mit einem Infrarotsensor verwendet werden, wobei deren Bilder überlagert und in einem gemeinsamen Bild angezeigt werden können, beispielsweise dergestalt, dass in das Kamerabild die warmen Partien eines Infrarotbildes, die beispielsweise Personen anzeigen können, eingeblendet werden. Die Verwendung einer Video- und/oder Fernsehkamera ist jedoch insofern vorteilhaft, als ein realitätsnahes Bild erzeugt wird, das dem Maschinenführer das Gefühl vermittelt, mit eigenen Augen zu sehen.

Eine solche Kamera bzw. bildgebende Sensorik zum Darstellen der Maschinenumgebung bzw. des Arbeitswerkzeugs der ferngesteuerten Maschine kann beispielsweise an der Maschine selbst fest oder verschwenkbar angebracht sein, beispielsweise an der Kranführerkabine eines Krans und/oder an der Laufkatze eines Turmdrehkrans oder an anderer geeigneter Stelle, wobei die Kamera vorteilhafterweise derart ausgerichtet ist, dass das Arbeitswerkzeug, beispielsweise der Lasthaken eines Krans, beobachtet werden kann. Vorteilhafterweise können hierbei auch mehrere Kameras vorgesehen sein, um das Arbeitswerkzeug aus verschiedenen Perspektiven betrachten zu können.

In vorteilhafter Weiterbildung der Erfindung kann auch eine verfahrbare und/oder an verschiedene Orte bewegbare Kamera eingesetzt werden, die es erlaubt, das Arbeitswerkzeug und/oder die Maschinenumgebung aus verschiedene Blickrichtungen darzustellen.

In Weiterbildung der Erfindung kann insbesondere auch eine Kamera eingesetzt werden, die an einer Flugdrohne montiert ist. Es wird also vorgeschlagen, eine ferngesteuerte, mit einer Kamera ausgerüstete Flugdrohne zu verwenden, mittels derer das gewünschte Kamerabild des Arbeitswerkzeugs und/oder der Werkzeugumgebung aus verschiedenen Blickrichtungen bereitgestellt werden kann. Insbesondere kann mittels einer solchen Flugdrohne auch ein perspektivisches Kamerabild des Arbeitswerkzeugs und dessen Umgebung aus schrägen Blickachsen bereitgestellt werden, die von einem Punkt beabstandet von der Maschine und dessen Führerstand und oberhalb des Bodens gewonnen werden können, so dass dem Maschinenführer das Arbeitswerkzeug und dessen Umgebung aus einer Blickrichtung visualisiert werden kann, wie sie auch ein externer Betrachter sehen würde. Bei einem Kran können beispielsweise Kamerabilder des Lasthakens und dessen Umgebung bereitgestellt werden, die von der Seite her schräg oder senkrecht auf die vertikale Kranmittelebene durch den Ausleger schauen. Auch aus Drohnenpositionen, die in dieser durch den Ausleger gehenden, vertikalen Kranmittelebene liegen, können Bilder des Lasthakens bereitgestellt werden. Durch solche perspektivischen Kamerabilder aus verschiedenen Blickachsen können die Relativpositionen zwischen Arbeitswerkzeug und dessen Umgebung bzw. einem Zielpunkt sehr viel besser visualisiert werden.

Um eine einfache Bedienung der Flugdrohne zu ermöglichen, kann in Weiterbildung der Erfindung die Flugdrohne in Abhängigkeit einer Maschinenstellung und/oder Arbeitswerkzeugposition angesteuert werden derart, dass die Flugdrohne Maschinen-, insbesondere Arbeitswerkzeugbewegungen automatisch folgt und eine gewünschte Position relativ zu der Maschine und/oder deren Arbeitswerkzeug auch bei Maschinenbewegungen, insbesondere Arbeitswerkzeugbewegungen zumindest näherungsweise hält bzw. zu halten versucht und nachfährt. Wird die Flugdrohne beispielsweise in Verbindung mit einem Kran verwendet, kann die Flugdrohne bei aktiviertem, automatischem Folgemodus dem Lasthaken des Krans automatisch folgen. Wird beispielsweise eine Relativposition der Flugdrohne etwa auf Lasthakenhöhe bzw. ein Stück weit oberhalb mit seitlicher Beabstandung zur vertikalen Kranmittelebene durch den Ausleger gewünscht und eingestellt, kann die Flugdrohne ihre Flughöhe automatisch erniedrigen oder erhöhen, wenn der Lasthaken abgesenkt oder angehoben wird, und/oder parallel zur vertikalen Kranmittelebene vor- oder zurückfliegen, wenn die Laufkatze des Krans verfahren wird und/oder seitlich quer nach links oder rechts fliegen, wenn der Kran verdreht wird.

Vorteilhafterweise kann die Flugdrohne jedoch auch autonom ferngesteuert werden derart, dass von der Flugdrohne verschiedene gewünschte Positionen relativ zu der Maschine und/oder deren Arbeitswerkzeug frei angeflogen werden können. Dies kann beispielsweise durch Eingeben einer Wunschposition für die Flugdrohne relativ zum Lasthaken bzw. dem Arbeitswerkzeug auf dem Touchscreen des Tabletcomputers erfolgen, beispielsweise dergestalt, dass in einem Positionssteuerungsmodul, das in dem Tabletcomputer vorgesehen sein kann, eine Position in Bezug auf den Lasthaken eingegeben wird, beispielsweise in Form "2 m oberhalb seitlich rechts vom Lasthaken". Alternativ oder zusätzlich kann jedoch die Flugdrohne auch gänzlich frei gegenüber der Maschine und deren Arbeitswerkzeug verflogen werden, beispielsweise mit Hilfe von Touch-Screen-Steueranzeigen, um die Flugdrohne so lange zu verfliegen, bis die Kameraposition und deren Blickwinkel auf das Arbeitswerkzeug und dessen Umgebung dem Kranführer bzw. Maschinenführer zusagt.

Das Kamera-Steuerungsmodul kann in dem Tabletcomputer in Form eines Softwarebausteins, bspw. als herunterladbare App, hinterlegt werden, wobei Steuerungsbefehle für das Verändern der Kameraposition und/oder der Blickrichtung der Kamera bspw. in einem aufrufbaren Steuerungsfenster als Touchscreen-Anzeigemittel angezeigt werden können.

Die zuvor genannte virtuelle Darstellung der Maschinenumgebung kann von dem grafischen Simulationsmodul vorteilhafterweise verändert und in Abhängigkeit von verschiedenen Datensätzen, die über eine Schnittstelle in das Simulationsmodul einspielbar sind, verschiedenen Szenarien angepasst werden. Insbesondere können Planungsdaten wie CAD-Daten eines herzustellenden Bauwerks und/oder Baustellen-Istdaten, die je nach Baufortschritt den Istzustand eines entstehenden Gebäudes oder Bauwerks wiedergeben, über eine entsprechende Datenschnittstelle in das Simulationsmodul eingespielt werden und von dem Simulationsmodul dazu verwendet werden, die virtuelle Darstellung der Maschinenumgebung entsprechend dem eingespielten Datensatz, insbesondere in Abhängigkeit der eingespielten Planungsdaten und/oder Baustellen-Istdaten, zu generieren bzw. daran anzupassen.

Die genannten Baustellen- bzw. Bauwerksinformationen können in der vorgenannten Weise CAD-Daten oder andere Geometriedaten des Bauwerks oder der Baustelle sein, wobei ggf. auch digitale Bilddaten Verwendung finden können, die das tatsächliche Bauwerk und dessen Baufortschritt wiedergeben. Derartige Bilddaten können als Maschinenumgebungsdaten über die genannte CAD-Schnittstelle bzw. eine geignete Bilddaten-Schnittstelle in das grafische Simulationsmodul eingespielt werden, welches dann die virtuelle Darstellung an diese übernommenen CAD- und/oder Bilddaten anpasst.

Die Modellierung einer geplanten oder schon existierenden oder teilweise ausgeführten Baustelle und die entsprechende Generierung der virtuellen Darstellung der Maschinenumgebung durch das grafische Simulationsmodul ist insbesondere auch ein wertvolles Hilfsmittel, um die Logistik auf einer Baustelle sicherzustellen und auch bereits vor Baubeginn kritische Abläufe simulieren und einüben zu können.

In vorteilhafter Weiterbildung der Erfindung kann die Fernsteuereinrichtung an verschiedene Geräte, insbesondere verschiedene Gerätetypen angebunden werden und eine Steuerungskommunikation mit dem jeweils ausgewählten Gerät aufbauen. Dies können insbesondere verschiedene, auf einer Baustelle genutzte Gerätschaften wie Krane, Bagger, Raupen oder ähnliche Maschinen, aber auch an verschiedenen Orten verwendete Geräte sein. Je nachdem, welches Gerät ferngesteuert werden soll, kann von der Fernsteuereinrichtung her und/oder vom jeweiligen Gerät her eine Steuerungs-Kommunikationsverbindung aufgebaut werden, beispielsweise durch Anwählen einer jeweiligen IP-Adresse über einen Router, wenn die Verbindung über ein Netzwerk erfolgt, oder auch in anderer Weise. Um eine ausreichend rasche Datenkommunikation zwischen Fernsteuerung und Maschine zu ermöglichen, wird vorteilhafterweise eine Kommunikationsverbindung hoher Bandbreite gewählt, um Echtzeitprobleme bzw. Zeitversatz zwischen Steuerbefehlen und Maschinenreaktionen zu vermeiden.

Um die Maschinenreaktionen verschiedener Maschinentypen realitätsnah abbilden zu können, kann die Fernsteuereinrichtung in Weiterbildung der Erfindung ein Konfigurationsmodul aufweisen, mittels dessen die Fernsteuereinrichtung wahlweise für einen jeweils fernzusteuernden Maschinentyp vorkonfiguriert werden kann. Die genannten Vorkonfigurationsmittel können die auf dem Bildschirm des Tablets angezeigten Touch-Screen-Steuerelemente sowie die Auswahl der Betätigungsmenüs und Bildschirmdarstellungen an das jeweilige Gerät anpassen. Insbesondere können aber auch Vorkonfigurationsmittel für die Bewegungssteuerung vorgesehen sein, mittels derer die angezeigten Steuerelemente für die Antriebsvorrichtungen der Maschine umkonfiguriert und an den jeweiligen Maschinentyp angepasst werden können, da beispielsweise ein oben drehender Turmdrehkran andere Antriebe besitzt als ein unten drehender Turmdrehkran oder ein Teleskop-Wippkran oder ein Bagger.

Das Konfigurationsmodul kann ferner auch Vorkonfigurationsmittel zum Anpassen der Anzeigeeinrichtung und der darauf wiedergegebenen Darstellung der Maschinenumgebung und/oder des Arbeitswerkzeugs aufweisen, wobei die genannten Vorkonfigurationsmittel vorzugsweise die Darstellung und/oder die Anzeigeeinrichtung an die am jeweiligen ferngesteuerten Maschinentyp vorhandenen oder einsetzbaren Kameras anpassen kann und/oder, falls die Darstellung virtuell berechnet wird, die Parameter für die Berechnung der virtuellen Darstellung an den jeweiligen Maschinentyp anpassen kann.

Um den Tabletcomputer einfach tragen bzw. am Körper führen zu können, kann die Fernsteuereinrichtung vorteilhafterweise eine Körpermontagevorrichtung zum Montieren bzw. Halten des Tabletcomputers am Körper des Maschinenführers umfassen, wobei die genannte Körpermontagevorrichtung vorteilhafterweise einen Hals- und/oder Schultergurt umfassen kann, der um den Hals und/oder eine Schulter des Maschinenführers legbar und an dem Tabletcomputer befestigbar ist. Zum Befestigen des Haltegurts am Tabletcomputer kann bspw. ein Halterahmen vorgesehen sein, in den der Tabletcomputer einschiebbar oder einsetzbar oder in anderer Weise befestigbar ist und der mit dem genannten Gurt verbindbar ist.

Der genannte Hals- und/oder Schultergurt kann vorteilhafterweise längenverstellbar sein.

Um den Tabletcomputer mit entspannter Armhaltung bedienen zu können, kann die genannte Körpermontagevorrichtung einen Abstandshalter umfassen, der den Tabletcomputer vom Bauch des Maschinenführers nach vorne beabstandet positioniert. Ein solcher Abstandshalter kann eine Stützstrebe umfassen, die bspw. über den vorgenannten Halterahmen an dem Tabletcomputer in einer festen Ausrichtung anbringbar ist und den Tabletcomputer gegenüber dem Bauch bzw. dem Vorderkörper des Benutzers abstützt und ein Stück weit entfernt hält.

Um die Handhabung der Fernsteuereinrichtung weiter zu erleichtern, kann zusätzlich zu dem genannten Tablet auch ein weiterer Elektronikbaustein vorgesehen sein, der die Eingabe von Steuerbefehlen ermöglicht bzw. erlaubt. Insbesondere kann ein solcher Elektronikbaustein in eine Armbanduhr integriert sein, die eine sogenannte Smart Watch bilden und einen Bildschirm mit Touchscreen-Funktion besitzen kann. Alternativ oder zusätzlich zu einem solchen Bildschirm mit Touchscreen-Funktion kann die Armbanduhr aber auch mechanische Eingabeelemente zum Eingeben von Steuerbefehlen aufweisen, bspw. Druckknöpfe, Drehknöpfe oder Schieber. Vorteilhafterweise ist der genannte Armband-Elektronikbaustein dazu konfiguriert, einfache Steuerbefehle einzugeben, bspw. die Befehle 'Auf' und ,Ab' für das Anheben und Absenken des Lasthakens eines Krans. Solche einfachen Steuerbefehle lassen sich auch in sicherer Weise über den Armband-Elektronikbaustein eingeben, ohne hierfür den vorgenannten Tabletcomputer zu benutzen.

Ein solcher zusätzlicher Elektronikbaustein kann mit dem Tabletcomputer kommunizieren, bspw. über eine Bluetooth-Verbindung oder eine andere, geeignete Datenkommunikationsverbindung. Die an dem zusätzlichen Elektronikbaustein eingegebenen Steuerbefehle können an den Tabletcomputer übertragen und von diesem wiederum auf die Steuerungsvorrichtung der fernzusteuernden Maschine übertragen werden. Umgekehrt können von dem Tabletcomputer Anzeigesignale an den zusätzlichen Elektronikbaustein übertragen werden, um dort entsprechend angezeigt zu werden.

Alternativ oder zusätzlich zu einer solchen Dreiecks-Kommunikation über den Tabletcomputer ist es jedoch. auch möglich, dass der genannte zusätzliche Elektronikbaustein direkt mit der Steuerungsvorrichtung der fernzusteuernden Maschine kommuniziert, bspw. über eine geeignete Funkverbindung oder andere geeignete Datenkommunikationsmittel wie einen Router.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Darstellung einer Fernsteuerung in Form eines Tabletcomputers mit einem Touchscreen-Bildschirm zum Fernsteuern eines Krans, einer Baumaschine bzw. eines Flurförderzeugs, wobei die Teilansicht (a) die Halteeinrichtung für den Tabletcomputer im montierten Zustand und die Teilansicht (b) die Halteeinrichtung in einer Explosionsdarstellung zeigt,
- Fig. 2:: eine schematische, perspektivische Darstellung eines zusätzlichen Elektronikbausteins der Fernsteuereinrichtung, der als Armbanduhr ausgebildet ist und die Eingabe von Steuerbefehlen wie ,Auf' und ,Ab' für den Lasthaken des Krans oder ähnliche Steuerbefehle erlaubt,
- Fig 3:: eine schematische Darstellung der Systemarchitektur der Fernsteuerung und deren Komponenten aus den vorhergehenden Figuren,
- Fig. 4:: eine schematische Darstellung eines Krans, in dessen Arbeitsumgebung einer Baustelle sowie der Komponenten der Fernsteuereinrichtung für den Kran aus den vorhergehenden Figuren,
- Fig. 5:: eine schematische Darstellung der Systemarchitektur mehrerer, miteinander vernetzter Fernsteuereinrichtungen zum Fernsteuern mehrerer Krane oder ähnlicher Maschinen,
- Fig. 6:: eine schematische Darstellung mehrerer Krane, die mit den miteinander vernetzten Fernsteuerungen aus Fig. 5 bedienbar sind, und
- Fig. 7:: eine schematische Darstellung des Bildschirms des Tabletcomputers der Fernsteuereinrichtung aus den vorhergehenden Figuren, wobei auf dem Bildschirm ein Ist-Bild des Lasthakens eines Krans von einer Kamera angezeigt und darin eingeblendet Touchscreen-Anzeigemittel zum Eingeben von Steuerbefehlen eingeblendet sind.

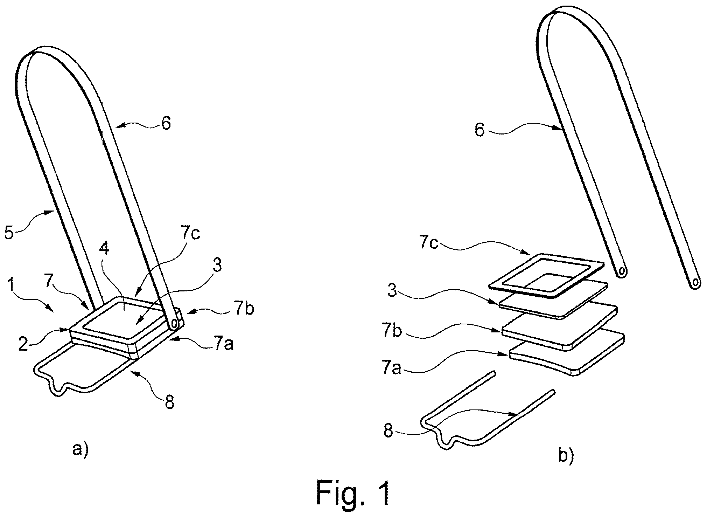

Wie Fig. 1 zeigt, kann die Fernsteuer-Einrichtung 1 als Kran-Fernsteuerung ausgebildet sein, die ein mobiles Endgerät 2 in Form eines Tabletcomputers 3 umfasst und bspw. zum Fernsteuern einesTurmdrehkrans, eines Hafenkrans oder eines Maritimkrans oder Mobil-Teleskopkrans Verwendung finden kann.

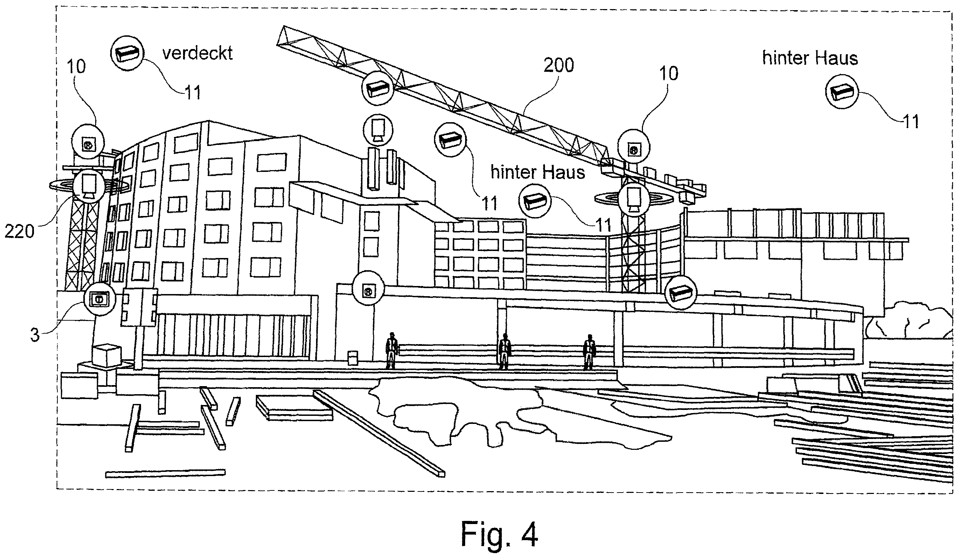

Der Kran 200 kann hierbei als Turmdrehkran ausgebildet sein, dessen Turm einen Ausleger trägt, an dem eine Laufkatze verfahrbar gelagert ist, vgl. Fig. 4.. Der Ausleger kann zusammen mit dem Turm oder auch ohne den Turm - je nach Ausbildung des Krans als Oben- oder Untendreher - um eine aufrechte Achse verdreht werden, wozu ein Drehwerksantrieb vorgesehen ist. Der Ausleger könnte ggf. auch auf- und niederwippbar um eine liegende Querachse ausgebildet sein, wobei ein geeigneter Wippantrieb beispielsweise im Zusammenspiel mit der Auslegerabspannung vorgesehen sein könnte. Die genannte Laufkatze kann mittels einer Katzfahrwinde oder eines anderen Katzfahrantriebs verfahren werden.

Wie Fig. 1 zeigt kann die genannte Fernsteuereinrichtung 1 einen an sich handelsüblichen Tabletcomputer 3 umfassen, der durch Einspielen entsprechender Softwarebausteine, bspw. durch Herunterladen von Apps, zum Fernsteuern des genannten Krans konfiguriert werden kann. Der Tabletcomputer 3 umfasst dabei einen Bildschirm 4, der im Wesentlichen die gesamte Frontseite des Tabletcomputers 3 einnimmt und als Touchscreen-Bildschirm ausgebildet sein kann.

Um den Tabletcomputer 3 besser halten bzw. führen zu können, ist eine Körpermontagevorrichtung 5 vorgesehen, mittels derer der Tabletcomputer 3 am Körpers eines Maschinenführers gehalten wird. Die genannte Körpermontagevorrichtung 5 kann dabei vorteilhafterweise einen Tragegurt oder - riemen 6 umfassen, der als Halsgurt oder ggfs. auch als Schultergurt ausgebildet sein kann und dazu bestimmt ist, an den Hals bzw. die Schulter des Maschinenführers gehängt zu werden. Der genannte Tragegurt 6 kann dabei längeneinstellbar sein, um die Trageposition am Körper einstellen zu können.

Der genannte Tragegurt 6 ist mit dem Tabletcomputer 3 durch einen Halterahmen 7 verbunden, an dem der paneelförmige, flache Tabletcomputer 3 lösbar befestigt werden kann. Wie Fig. 1 zeigt, kann der Halterahmen 7 mehrteilig ausgebildet sein und eine sandwichartige Struktur besitzen, zwischen deren Teilen der Tabletcomputer 3 gehalten wird. Beispielsweise kann ein wannenförmiges Bodengehäuse 7a vorgesehen sein, in das der Tabletcomputer passgenau eingelegt werden kann, ggfs. unter Zwischenschaltung eines Weichmaterialteils 7b oder Softcase-Teils, das bspw. aus einem Softkunststoff bestehen kann und den Tabletcomputer 3 vor Stößen schützt und/oder Passungstoleranzen zum wannenförmigen Bodengehäuse ausgleicht. Ein Deckrahmen 7c kann von oben auf den Tabletcomputer 3 gesetzt werden, um diesen in dem Bodengehäuse 7a zu halten.

Vorteilhafterweise kann die Körpermontagevorrichtung 5 einen Abstandshalter 8 umfassen, der an dem Halterahmen 7 in einer vorbestimmten Ausrichtung angebracht sein kann, insbesondere von einer Schmalseite des Tabletcomputers 3 abstehend ausgerichtet sein kann, um den Tabletcomputer 3 vom Bauch des Maschinenführers nach vorne abgestützt zu halten. Wie Fig. 1 zeigt, kann ein solcher Abstandshalter 8 bspw. als Stützbügel ausgebildet sein, der vorteilhafterweise in den Halterahmen 7 eingeschoben werden kann, um in einer Transportposition verstaut zu sein, und umgekehrt ausgefahren werden kann, um in der Arbeitsstellung gemäß der Teilansicht (a) der Fig. 1 den Tabletcomputer 3 abzustützen.

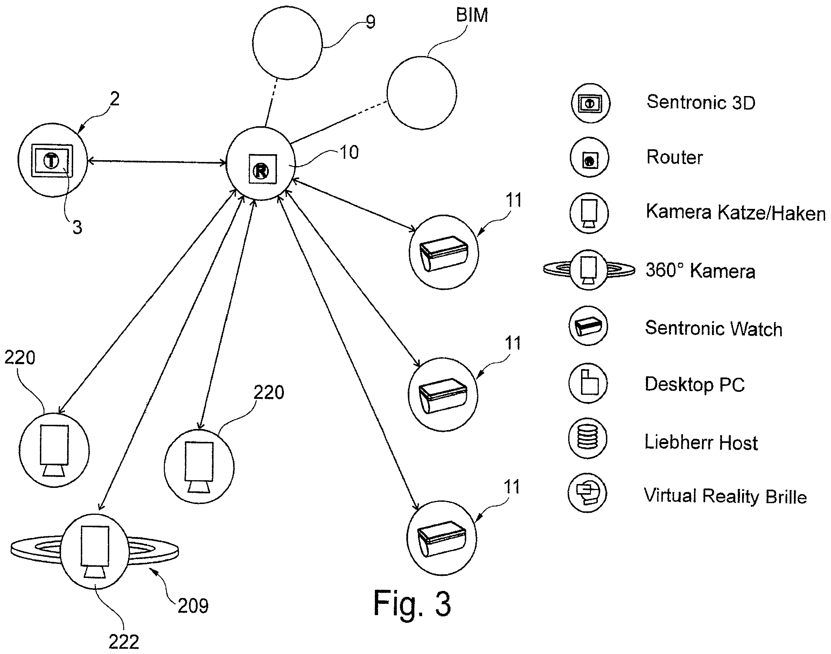

Wie Fig. 3 zeigt, kann der Tabletcomputer 3 über eine vorzugsweise kabellose Datenkommunikationsverbindung mit einem Steuerungsrechner 9 kommunizieren, der unmittelbar der Steuerungsrechner des Krans sein kann bzw. dessen Steuerungsvorrichtung bilden kann, oder alternativ ein Baustellenrechner ist, der wiederum mit einem oder mehreren Steuerungsvorrichtungen eines oder mehrerer Krane kommunizieren kann. Wie Fig. 3 zeigt, kann der genannte Steuerungsrechner 9 dabei einen Router 10 umfassen, an den einerseits der Tabletcomputer 3 angebunden ist und andererseits weitere Elektronikbausteine angeschlossen sind.

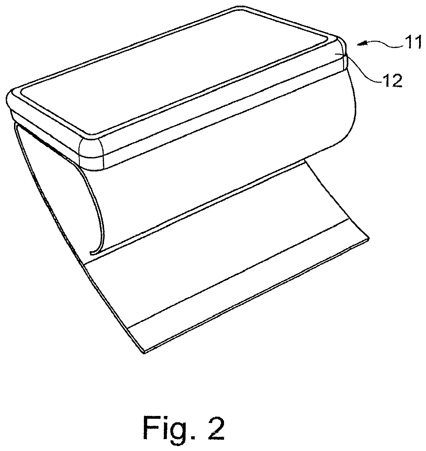

Ferner kann, wie Fig. 2 zeigt, ein zusätzlicher Elektronikbaustein 11 Teil der Fernsteuereinrichtung 1 sein, welcher Elektronikbaustein 11 bspw. in Form einer Armbanduhr ausgebildet oder in anderer Weise am Körper tragbar befestigt sein kann. Insebsondere kann der genannte Elektronikbaustein 11 als sogenannte Smart Watch 12 ausgebildet sein, die einen Bildschirm mit Touchscreen-Funktion umfassen kann, um Steuerbefehle für den Kran eingeben zu können.

Auf dem genannten Tabletcomputer 3 und auf der zusätzlichen Smart Watch 12, die ggfs. auch als Mobiltelefon ausgebildet sein kann, können durch Einspielen entsprechender Softwarebausteine Steuerungsoberflächen auf den Bildschirmen angezeigt werden, welche Steuerungsoberflächen die Eingabe von Steuerbefehlen erlauben. Insbesondere können auf dem Bildschirm 4 des Tabletcomputers 3 und dem Bildschirm der Smart Watch 12 jeweils Touchscreen-Anzeigemittel 13 in Form von grafischen Symbolen wie Pfeilen, Piktogrammen oder Buchstaben und/oder Zahlensymbolen angezeigt werden, die bei Berühren mit einem Finger oder einem Handteil einen entsprechenden Steuerbefehl auslösen, wie dies als Touchscreentechnik per se bekannt ist.

Auf dem Tabletcomputer 3 sind dabei jedoch nicht nur die genannten Steuerbefehle bzw. die hierfür stehenden Touchscreen-Anzeigemittel 13 dargestellt, sondern vorteilhafterweise auch ein Ist-Bild der Maschinen- bzw. Arbeitsumgebung und/oder eine virtuelle Darstellung der Arbeitsumgebung bzw. des zu erstellenden Bauwerks und/oder anderer, für den Arbeitsvorgang hilfreicher Bauteile oder Informationen.

Wie dies Fig. 3 zeigt, ist der Tabletcomputer 3 hierzu über den genannten Router 10 mit einem BIM, das heißt einem sogenannten Baustellendatenmodell verbindbar, das in dem Steuerungsrechner 9 abgelegt sein kann oder auf das der Steuerungsrechner 9 Zugriff hat. Gegebenenfalls kann der Tabletcomputer 3 auch am Router 10 vorbei direkt mit dem genannten Baustellendatenmodell kommunizieren. Über eine entsprechende Datenschnittstelle sind dem Tabletcomputer 3 aus dem Baustellendatenmodell BIM entsprechende digitale Bauwerks- und/oder Baustelleninformationen oder andere relevante digitale Informationen einspielbar, die auf dem Bildschirm 4 des Tabletcomputers 3 anzeigbar sind. Insbesondere können anhand der BIM-Daten virtuelle Darstellungen des zu errichtenden Bauwerks und/oder der Arbeitsumgebung des Krans dargestellt werden.

Alternativ oder zusätzlich zu einer solchen virtuellen Darstellung kann jedoch am Tabletcomputer 3 auch eine echte, kameragenerierte Darstellung der Kranumgebung und/oder des Lasthakens verwendet werden. Hierzu kann am Kran 200 zumindest eine Kamera montiert sein, deren Livebilder an das Tablet 3 übertragen werden. Eine solche Kamera 220 kann beispielsweise an der Kranführerkabine des ferngesteuerten Krans 200 montiert sein und vorteilhafterweise zumindest näherungsweise eine Blickachse haben, die der Blickachse eines Kranführers in der Kranführerkabine entspricht und/oder von der Kranführerkabine zum Lasthaken hin geht.

Alternativ oder zusätzlich können aber auch andere Kameras und/oder Darstellungen aus anderen Perspektiven aufgenommen und an den Tabletcomputer 3 übertragen werden, um dort angezeigt zu werden. Insbesondere kann eine Flugdrohne verwendet werden, die mit zumindest einer Kamera ausgerüstet ist und ferngesteuert relativ zum Kran 200 bewegt werden kann.

Um den Lasthaken , der mit einem von der Laufkatze ablaufenden Hubseil verbunden sein kann, oder eine daran aufgenommene Last bzw. die Umgebung des Lasthakens 208 auch dann sehen zu können, wenn sich der Lasthaken 208 außerhalb des Sichtbereichs der Kranführerkabine bzw. des Kranführers befindet, beispielsweise wenn - wie Fig. 1 zeigt - die Last hinter einem Gebäude abzusetzen ist, ist erfindungsgemäß eine Flugdrohne 209 vorgesehen, an der zumindest eine Kamera 220 montiert ist, mittels derer ein Kamerabild vom Lasthaken 208 und/oder der Lasthakenumgebung bereitgestellt werden kann. Das genannte Kamerabild ist vorteilhafterweise ein Live- oder Echtzeitbild im Sinne eines Fernseh- oder Videobilds und wird von der Kamera 220 der Flugdrohne 209 drahtlos zu dem Display des Tablets 3 übertragbar.

Die Flugdrohne 209 ist mit einer Fernsteuereinrichtung 212 versehen, die es erlaubt, die Flugdrohne 209 fernzusteuern, insbesondere die Flugsteueraggregate wie beispielsweise Rotorblätter anzusteuern, um die Flugposition der Flugdrohne 209 fernzusteuern und/oder die Kamera 220 fernzusteuern, insbesondere hinsichtlich des Schwenkwinkels bzw. der Blickachse der Kamera 220 relativ zu dem Korpus der Flugdrohne 209 und/oder der Brennweite der Kamera 220.

Ein entsprechendes Fernsteuermodul kann in der mobilen Bedieneinheit 2vorgesehen sein. Insbesondere kann der Tabletcomputer 3 ein aufrufbares Steuerungsmenü für die Flugdrohne 209 besitzen, mittels dessen die Flugposition der Flugdrohne 209 relativ zum Kran 200, insbesondere relativ zu dessen Laufkatze gesteuert werden kann. Beispielsweise kann über entsprechende Touchscreen-Steuerelemente eine Wunschposition relativ zur Laufkatze und/oder relativ zum Lasthaken eingegeben werden, die die Flugdrohne 209 dann selbständig hält.

Um eine einfache Bedienung zu ermöglichen, kann jedoch auch eine Sprachsteuerung und/oder eine Auswahl-Menüsteuerung für die Flugdrohne 209 vorgesehen sein, beispielsweise um aus mehreren vorbestimmten Relativpositionen der Flugdrohne 209 relativ zum Kran eine gewünschte Relativposition auszuwählen. Dies kann beispielsweise dadurch erfolgen, dass per Sprachsteuerung und/oder Menüsteuerung "Drohnenposition 1" eingegeben wird, die vorprogrammiert bzw. vorbestimmt in der Positionssteuervorrichtung 213 abgelegt sein kann.

Vorteilhafterweise ist der Tabletcomputer 3 dazu konfiguriert, ein gewünschtes aus mehreren zur Verfügung gestellten Kamerabildern auszuwählen.

In das jeweils ausgewählte Kamerabild, das auf dem Bildschirm des Tabletcomputers 3 dargestellt wird, können durch Einblendung und/oder Bildzusammensetzung weitere virtuelle Darstellungen eingeblendet werden, die anhand der aus dem Baustellendatenmodell BIM eingespielten digitalen Daten generiert werden, sodass der Bildschirm des Tabletcomputers 3 gleichermaßen das reale Ist-Bild, das von einer Kamera bereitgestellt wird, und darin eingeblendet virtuelle Darstellungselemente der Arbeitsumgebung wie bspw. eine Bauwerkskontur darstellt.

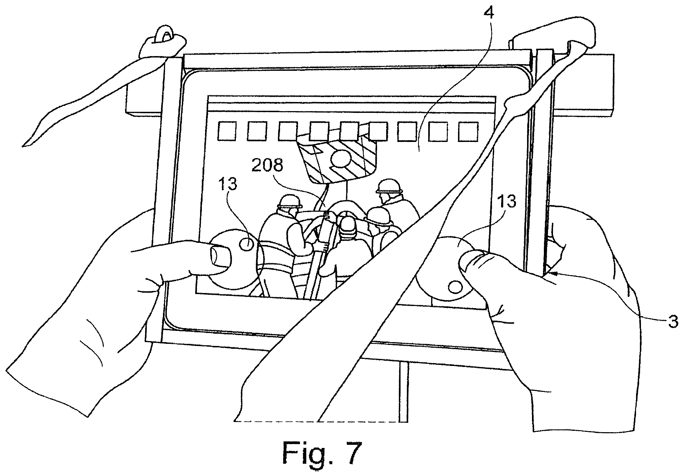

Wie Fig. 7 zeigt, können in das auf den Bildschirm des Tabletcomputers 3 dargestellte Bild weiterhin auch Touchscreen-Anzeigemittel 13 zum Eingeben von Steuerbefeheln eingeblendet werden, wobei im gezeigten Beispiel der Fig. 7 Zoom-Steuermittel zum Heranzoomen des dargestellten Lasthakens 208 bzw. zum Verändern der Brennweite und/oder Bildausschnitts einer Kamera dargestellt sind.

Will der fernsteuernde Maschinenführer ein Maschinenteil verstellen bzw. verfahren, bspw. den in Fig. 7 auf dem Bildschirm gezeigten Kranhaken 208 anheben oder absenken, kann der Tabletcomputer 3 bspw. derart konfiguriert sein, dass ein Antippen einer Bildschirmrandleiste die zur Verfügung stehenden Steuerbefehle in Form eines herausfahrenden bzw. aufpoppenden Steuerfensters anzeigen lässt. Darin können bspw. Touchscreen-Anzeigemittel 13 wie Verfahrpfeile in bestimmte Richtungen angezeigt werden, deren Antippen dann zu einem entsprechenden Verfahren führt.

Alternativ oder zusätzlich kann der Tabletcomputer 3 auch dazu konfiguriert sein, das zu verstellende bzw. zu verfahrende Maschinenbauteil durch Antippen auf dem Bildschirm des Tabletcomputers 3 identifizieren zu lassen und sodann durch Ziehen bzw. Verschieben des angetippten Bildelements auf dem Bildschirm einen entsprechenden Steuerbefehl zu generieren. Beispielsweise kann der in Fig. 7 auf dem Bildschirm des Tabletcomputers 3 dargestellte Lasthaken 208 angetippt werden, was der Tabletcomputer 3 als Wunsch einer Positionsverstellung für den Lasthaken interpretiert. Wischt dann bspw. der den Lasthaken antippende Finger nach oben oder nach unten auf dem Bildschirm des Tabletcomputers, kann der Tabletcomputer 3 dies als Wunsch einer Verstellung nach oben bzw. unten interpretieren und einen entsprechenden Steuerbefehl generieren. Eine solche Wischtechnik erlaubt eine besonders intuitive Bedienung der fernzusteuernden Maschine.

Alternativ oder zusätzlich zu einer solchen Steuerbefehlgenerierung am Tabletcomputer 3 kann der Maschinenführer einen entsprechenden Steuerbefehl auch über die zuvor genannte Smart Watch 12 eingeben.

Wie Fig 3 zeigt, kann die Fernsteuereinrichtung 1 in einer direkten Zuordnung mit einer fernzusteuernden Maschine arbeiten, wobei in diesem Fall der Tabletcomputer 3 und die eventuell vorhandenen Elektronikbausteine 11 über den genannten Router 10 mit Steuervorrichtung der jeweiligen Maschine kommunizieren können.

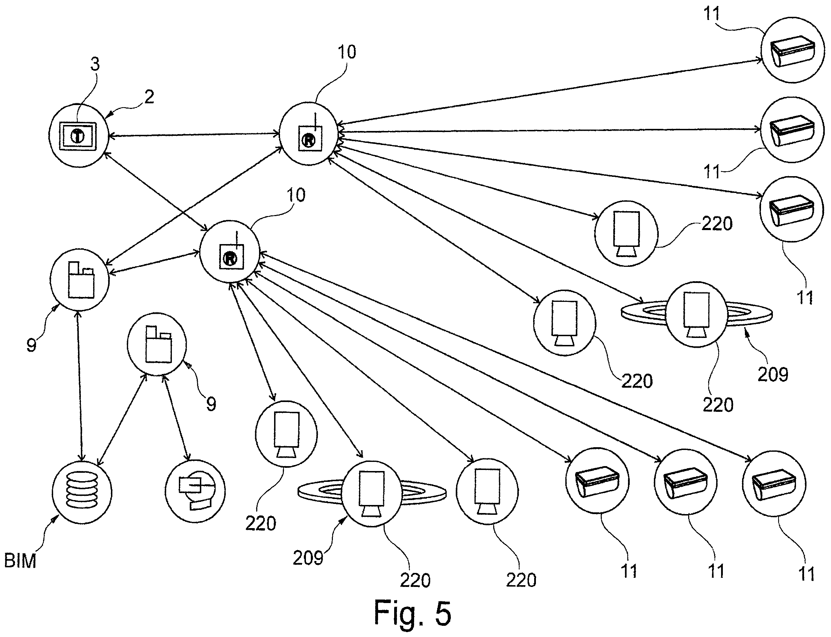

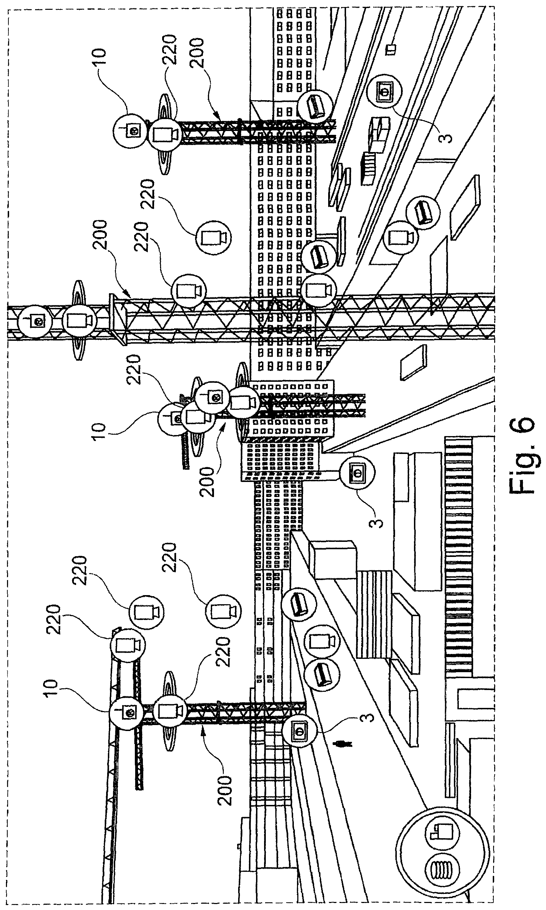

Wie die Figuren 5 und 6 zeigen, können jedoch auch mehrere Fernsteuereinrichtungen 1 miteinander vernetzt arbeiten, um mehrere Maschinen wie bspw. die Krane 200 einer Baustelle fernsteuern zu können, wobei bspw. mittels dreier Fernsteuerungen 1 sechs Krane gesteuert werden können. Hierzu kann über das Netzwerk, durch das die Fernsteuerungen 1 mit den Kranen vernetzt sind, von einer Fernsteuerung 1 auf mehrere Krane zugegriffen werden. Hierzu kann der jeweilige Tabletcomputer 3 bspw. ein Auswahlmenü umfassen, mittels dessen einer von mehreren Kranen, die an das Netzwerk angebunden sind, ausgewählt werden kann, woraufhin dann die am Tabletcomputer 3 generierten Steuerbefehle an den ausgewählten Kran geschickt werden.

## Patentansprüche

1. Fernsteuer-Einrichtung für einen Kran, eine Baumaschine oder ein Flurförderzeug, mit einem mobilen Endgerät (2) in Form eines Tabletcomputers (3), der einen Bildschirm (4) mit Touch-Screen-Funktion umfaßt und zumindest ein Eingabemittel zum Eingeben von Steuerbefehlen in Form eines Touch-Screen-Anzeigemittels (13) besitzt sowie eine Signalübertragungseinrichtung zum Übertragen der eingegebenen Steuerbefehle auf eine Steuervorrichtung des Krans, der Baumaschine oder des Flurförderzeugs aufweist, **dadurch gekennzeichnet, dass** das mobile Endgerät dazu konfiguriert ist,
- Bilddaten von einer Kamera (220) und/oder digitale Daten aus einem Bauwerkdatenmodell (BIM) zu empfangen,
- anhand der empfangenen Bilddaten der Kamera (220) und/oder der digitalen Daten aus dem Bauwerkdatenmodell (BIM) eine Darstellung der Maschinenumgebung und/oder eines Arbeitswerkzeugs der Maschine auf dem Bildschirm anzuzeigen, und
- das Eingabemittel zum Eingeben von Steuerbefehlen zumindest zeitweise gleichzeitig zur Darstellung der Maschinenumgebung und/oder des Arbeitswerkzeugs auf dem Bildschirm (4) anzuzeigen.

2. Fernsteuer-Einrichtung nach dem vorhergehenden Anspruch, wobei das Eingabemittel (13) zum Eingeben von Steuerbefehlen in die Darstellung der Maschinenumgebung und/oder des Arbeitswerkzeugs nach Art einer überlagerten Darstellung eingeblendet oder nach Art eines Fensters neben der Darstellung der Maschinenumgebung und/oder des Arbeitswerkzeugs auf dem Bildschirm angezeigt wird.

3. Fernsteuer-Einrichtung nach einem der vorhergehenden Ansprüche, wobei das mobile Endgerät (2) ein grafisches Simulationsmodul zum Berechnen einer virtuellen Darstellung der Maschinenumgebung und/oder von Maschinenkomponenten aufweist, wobei das grafische Simulationsmodul eine Datenschnittstelle zum Einspielen von Bauwerks- und/oder Baustellendaten aufweist und eine Bildverarbeitungseinrichtung zum Generieren und/oder Anpassen der virtuellen Darstellung der Maschinenumgebung in Abhängigkeit der eingespielten Baustellen- und/oder Bauwerksdaten aufweist, wobei die genannte Datenschnittstelle eine CAD-Schnittstelle ist und die Bildverarbeitungseinrichtung zum Generieren und/oder Anpassen der virtuellen Darstellung der Maschinenumgebung in Abhängigkeit der über die CAD-Schnittstelle eingespielten CAD-Daten ausgebildet ist, und/oder eine Bilddaten-Schnittstelle ist und die Bildverarbeitungseinrichtung zum Generieren und/oder Anpassen der virtuellen Darstellung der Maschinenumgebung in Abhängigkeit der über die Bilddaten-Schnittstelle eingespielten, vorzugsweise digitalen Bilddaten ausgebildet ist.

4. Fernsteuer-Einrichtung nach einem der vorhergehenden Ansprüche, wobei das mobile Endgerät (2) eine Anzeigesteuervorrichtung zum Generieren einer überlagerten Bildschirmdarstellung nach Art eines Virtual-Reality-Bilds auf dem Bildschirm, das aus den empfangenen Bilddaten der Kamera (220) und den empfangenen digitalen Daten aus dem Bauwerkdatenmodell (BIM) und somit aus einem Kamerabild der Maschinenumgebung und einer virtuellen Darstellung der Maschinenumgebung und/oder eines Bauwerkteils zusammengesetzt ist, aufweist.

5. Fernsteuer-Einrichtung nach einem der vorhergehenden Ansprüche, wobei zumindest eine Live-Kamera (220) zum Bereitstellen eines Livebilds des Arbeitswerkzeugs und/oder der Maschinenumgebung vorgesehen ist und das mobile Endgerät (2) zumindest einen Bildempfänger zum Empfangen des Livebilds der Kamera aufweist, welches Livebild der auf dem Bildschirm angezeigten Darstellung zugrunde liegt, wobei
- die zumindest eine Kamera (220) an einer ferngesteuerten Flugdrohne (209) montiert ist und der Tabletcomputer (3) Positionssteuermittel in Form eines Touch-Screen-Anzeigemittels zum Fernsteuern der Flugdrohne derart, dass von der Flugdrohne verschiedene gewünschte Positionen relativ zur Maschine und/oder deren Arbeitswerkzeug angeflogen werden, aufweist, und/oder
- zumindest eine Kamera (220) zum Bereitstellen eines Livebilds der Maschinenumgebung am Kran, an der Baumaschine oder am Flurförderzeug montiert ist, insbesondere an einer Führerkabine mit einer Blickrichtung zumindest näherungsweise auf das Arbeitswerkzeug, wobei der Tabletcomputer (3) Kamerasteuermittel in Form eines Touch-Screen-Anzeigemittels zum Fernsteuern des Blickwinkels und/oder der Zoomeinstellung der Kamera aufweist.

6. Fernsteuer-Einrichtung nach einem der vorhergehenden Ansprüche, wobei der Tabletcomputer (3) dazu konfiguriert ist,
- auf seinem Bildschirm (4) ein Kamera-Auswahlmenü zum Auswählen des Kamerabildes einer von mehreren Kameras anzuzeigen und nach Auswahl einer Kamera dessen Kamerabild anzuzeigen, und/oder
- ein Touchscreen-Steuerungsmittel zum Steuern der Brennweite und/oder des Bildausschnitts einer Kamera anzuzeigen.

7. Fernsteuer-Einrichtung nach einem der vorhergehen Ansprüche, wobei der Tabletcomputer (3) dazu ausgebildet ist,
- in Abhängigkeit von digitalen Informationen aus dem Bauwerkdatenmodell in Abhängigkeit einer bestimmten Bauphase auf dem Bildschirm des Tabletcomputers eine virtuelle Darstellung des Bauwerks gemäß einem bestimmten Ist-Zustand und/oder eine virtuelle Darstellung der nächsten von der Baumaschine auszuführenden Arbeitsaufgabe anzuzeigen, und/oder
- in Abhängigkeit von digitalen Daten aus dem Bauwerkdatenmodell (300) eine virtuelle Darstellung des nächsten zu bearbeitenden Bauteils und der Einbauposition des genannten Bauteils am Bauwerk auf dem Bildschirm des Tabletcomputers anzuzeigen.

8. Fernsteuer-Einrichtung nach einem der vorhergehenden Ansprüche, wobei der Tabletcomputer (3) dazu ausgebildet ist,
- eine von der Baumaschinen-Steuervorrichtung berücksichtigte Arbeitsbereichsbegrenzungs-Funktion in Abhängigkeit von digitalen Informationen aus dem Bauwerkdatenmodell zu verändern,
- die veränderte Arbeitsbereichsbegrenzung dynamisch in der Darstellung der Maschinenumgebung auf dem Bildschirm anzuzeigen, und
- die Arbeitsbereichsbegrenzungs-Funktion in Abhängigkeit von Baufortschritten am zu errichtenden und/oder zu bearbeitenden Bauwerk unter Berücksichtigung von digitalen Informationen aus dem Bauwerkdatenmodell automatisch zu aktualisieren und/oder automatisch zyklisch oder laufend anzupassen.

9. Fernsteuer-Einrichtung nach einem der vorhergehenden Ansprüche, wobei der Tabletcomputer (3) ein Konfigurationsmodul zur wahlweisen Vorkonfiguration für einen aus mehreren Maschinentypen aufweist, insbesondere einen Konfigurationsbaustein zum Anpassen der Eingabemittel in Form des Touch-Screen-Anzeigemittels an den ausgewählten Maschinentyp.

10. Fernsteuer-Einrichtung nach einem der vorhergehenden Ansprüche, wobei der Tabletcomputer (3) dazu konfiguriert ist,
- über ein Netzwerk mit verschiedenen, fernzusteuernden Maschinen zu kommunizieren,
- ein Auswahlmenü zum Auswählen einer von mehreren Maschinen, die an das Netzwerk angebunden sind, anzuzeigen, und
- nach Auswählen einer der mehreren Maschinen am Bildschirm (4) generierte Steuerbefehle an die ausgewählte Maschine zu schicken.

11. Fernsteuer-Einrichtung nach einem der vorhergehenden Ansprüche, wobei zumindest ein weiterer, von dem Tabletcomputer (3) separater Elektronikbaustein (11) zum Eingeben von Steuerbefehlen vorgesehen ist, der am Körper des Maschinenführers tragbar und/oder befestigbar ist, wobei der Tabletcomputer (3) und der zumindest eine weitere Elektronikbaustein (11) zumindest teilweise einander überlappende Steuerungsfunktionen zur Ausführung anbieten derart, dass ein vom Maschinenführer gewünschter Steuerbefehl wahlweise am Tabletcomputer (3) oder dem weiteren Elektronikbaustein (11) eingebbar ist.

12. Fernsteuer-Einrichtung nach dem vorhergehenden Anspruch, wobei der genannte zusätzliche Elektronikbaustein (11) als Armbanduhr (12) oder Armbandcomputer ausgebildet ist und einen Bildschirm mit Touchscreen-Funktion aufweist.

13. Fernsteuer-Einrichtung nach einem der vorhergehenden Ansprüche, wobei der Tabletcomputer (3) dazu konfiguriert ist,
- ein zu verstellendes bzw. zu verfahrendes Maschinenteil durch Antippen der Darstellung des Maschinenteils auf dem Bildschirm (4) des Tabletcomputers (3) zu identifizieren,
- ein Ziehen und/oder Verschieben des angetippten Bildelements auf dem Bildschirm (4) hinsichtlich Richtung und/oder Betrag und/oder Geschwindigeit des Verschiebens zu erfassen, und
- einen Steuerbefehl zum Verfahren des identifizierten Maschinenteils in Abhängigkeit des erfassten Ziehens und/oder Verschiebens zu generieren.

14. Fernsteuer-Einrichtung nach einem der vorhergehenden Ansprüche, wobei eine Köpermontagevorrichtung (5) zum Montieren des Tabletcomputers (3) am Körper des Maschinenführers vorgesehen ist, wobei die Körpermontagevorrichtung (5) einen Halterahmen (7) mit Befestigungsmitteln zum Befestigen des Tabletcomputers (3) sowie einen an dem Halterahmen (7) befestigen Tragegurt (6) umfasst, wobei an dem Halterahmen (7) ein Abstandshalter (8) zum Abspreizen des Tabletcomputers (3) vor einem Bauch des Maschinenführers angebracht ist.

15. System umfassend eine Fernsteuer-Einrichtung (1), die gemäß einem der Ansprüche 1-14 ausgebildet ist, sowie einen Kran, eine Baumaschine oder ein Flurförderzeug, wobei zwischen dem Kran, der Baumaschine und/oder dem Flurförderzeug einerseits und dem Fernsteuer-Einrichtung (1) andererseits eine Kommunikationsverbindung vorgesehen ist, über die am Steuerstand (2) des Fernsteuer-Einrichtungs (1) eingegebene Steuerbefehle an die Steuereinrichtung des Krans, der Baumaschine und/oder des Flurförderzeugs übertragbar sind.

## Claims

1. A remote control device for a crane, for a construction machine, or for a pallet truck, having a mobile end device (2) in the form of a tablet computer (3) that comprises a screen (4) having a touchscreen function and that has at least one input means for inputting control commands in the form of a touchscreen display means (13) and that has a signal transmission device for transmitting the input control commands to a control apparatus of the crane, of the construction machine, or of the pallet truck, **characterized in that** the mobile end device is configured
- to receive image data from a camera (220) and/or digital data from a building information model (BIM);
- to display a representation of the machine environment and/or of a work tool of the machine on the screen with reference to the received image data of the camera (220) and/or to the digital data from the building information model (BIM); and
- to display the input means for inputting control commands on the screen (4) at least at times simultaneously with the representation of the machine environment and/or of the work tool.

2. A remote control device in accordance with the preceding claim, wherein the input means (13) for inputting control commands is faded into the representation of the machine environment and/or of the work tool in the manner of a superposed representation or is displayed on the screen in the manner of a window next to the representation of the machine environment and/or of the work tool.

3. A remote control device in accordance with one of the preceding claims, wherein the mobile end device (2) has a graphical simulation module for calculating a virtual representation of the machine environment and/or of machine components; wherein the graphical simulation module has a data interface for importing building information and/or construction site information and has an image processing device for generating and/or adapting the virtual representation of the machine environment in dependence on the imported construction site information and/or building information, and wherein said data interface is a CAD interface and the image processing device is configured for generating and/or adapting the virtual representation of the machine environment in dependence on the CAD data imported via the CAD interface and/or is an image data interface and the image processing device is configured for generating and/or adapting the virtual representation of the machine environment in dependence on the image data, preferably digital image data, imported via the image data interface.

4. A remote control device in accordance with one of the preceding claims, wherein the mobile end device (2) has a display control apparatus for generating a superposed screen representation in the manner of a virtual reality image on the screen that is assembled from the received image data of the camera (220) and the received digital data from the building information model (BIM) and thus from a camera image of the machine environment and from a virtual representation of the machine environment and/or of a building.

5. A remote control device in accordance with one of the preceding claims, wherein at least one live camera (220) is provided for providing a live image of the work tool and/or of the machine environment; and wherein the mobile end device (2) has at least one image receiver for receiving the live image of the camera, which live image is based on the representation displayed on the screen, wherein
- the at least one camera (220) is installed at a remote-controlled aerial drone (209); and the tablet computer (3) has position control means in the form of a touchscreen display means for the remote control of the aerial drone such that different desired positions relative to the machine and/or to its work tool are flown to by the aerial drone; and/or
- at least one camera (220) for providing a live image of the machine environment is installed at the crane, at the construction machine, or at the pallet truck, in particular at an operator's cabin having a direction of view at least approximately toward the work tool; wherein the tablet computer (3) has camera control means in the form of a touchscreen display means for the remote control of the angle of view and/or the zoom setting of the camera.

6. A remote control device in accordance with one of the preceding claims, wherein the tablet computer (3) is configured
- to display a camera selection menu for selecting the camera image of one of a plurality of cameras on its screen (4) and to display the camera image after the selection of a camera; and/or
- to display a touchscreen control means for controlling the focal length and/or the field of view of a camera.

7. A remote control device in accordance with one of the preceding claims, wherein the tablet computer (3) is configured
- to display a virtual representation of the structure in accordance with a determined actual state and/or a virtual representation of the next work task to be carried out by the construction machine on the screen of the tablet computer in dependence on digital information from the building information model in dependence on a specific construction phase; and/or
- to display a virtual representation of the next construction element to be worked and the installed position of said construction element at the building on the screen of the tablet computer in dependence on digital data from the building information model (300).

8. A remote control device in accordance with one of the preceding claims, wherein the tablet computer (3) is configured
- to change a working region boundary function taken into account by the construction machine control apparatus in dependence on digital information from the building information model;
- to dynamically display the changed working region boundary in the representation of the machine environment on the screen; and
- to automatically update and/or to automatically adapt cyclically or continuously the working region boundary function in dependence on construction progresses at the building to be erected and/or to be worked while taking account of digital information from the building information model.

9. A remote control device in accordance with one of the preceding claims, wherein the tablet computer (3) has a configuration module for a selective preconfiguration for one of a plurality of machine types, in particular a configuration module for adapting the input means in the form of the touchscreen display means to the selected machine type.

10. A remote control device in accordance with one of the preceding claims, wherein the tablet computer (3) is configured
- to communicate with different machines to be remote controlled over a network;
- to display a selection menu for selecting one of a plurality of machines that are connected to the network; and
- to send generated control commands to the selected machine after selecting one of the plurality of machines on the screen (4).

11. A remote control device in accordance with one of the preceding claims, wherein at least one further electronic module (11), separate from the tablet computer (3), is provided for inputting control commands and is wearable and/or fastenable to the body of the machine operator; and wherein the tablet computer (3) and the at least one further electronic module (11) provide at least partially mutually overlapping control functions for execution such that a control command desired by the machine operator can selectively be input on the tablet computer (3) or on the further electronic module (11).

12. A remote control device in accordance with the preceding claim, wherein said additional electronic module (11) is configured as a wristwatch (12) or as a wristband computer and has a screen having a touchscreen function.

13. A remote control device in accordance with one of the preceding claims, wherein the tablet computer (3) is configured
- to identify a machine part to be adjusted or to be traveled by tapping the representation of the machine part on the screen (4) of the tablet computer (3);
- to detect a dragging and/or displacing of the tapped image element on the screen (4) with respect to the direction and/or degree and/or speed of the displacement; and
- to generate a control command to travel the identified machine part in dependence on the detected dragging and/or displacement.

14. A remote control device in accordance with one of the preceding claims, wherein a body installation apparatus (5) is provided for installing the tablet computer (3) at the body of the machine operator; wherein the body installation apparatus (5) comprises a holding frame (7) having fastening means for fastening the tablet computer (3) and comprises a carry strap (6) fastened to the holding frame (7); and wherein a spacer (8) is attached to the holding frame (7) to splay the tablet computer (3) in front of the stomach of the machine operator.

15. A system comprising a remote control device (1) that is configured in accordance with one of the claims 1 to 14; and a crane; a construction machine; or a pallet truck, wherein a communication connection via which control commands input at the control station (2) of the remote control device (1) can be transmitted to the control device of the crane, of the construction machine and/or of the pallet truck is provided between the crane, the construction machine and/or the pallet truck, on the one hand, and the remote control device (1), on the other hand.

## Revendications

1. Dispositif de commande à distance pour une grue, pour un engin de construction ou pour un chariot de manutention, ayant un dispositif terminal mobile (2) sous la forme d'une tablette électronique (3) qui comprend un écran (4) ayant une fonction d'écran tactile et qui a au moins un moyen de saisie pour entrer les instructions de commande sous la forme d'un moyen d'affichage à écran tactile (13) ainsi qu'un dispositif de transmission de signaux pour transmettre les instructions de commande saisies à un appareil de contrôle de la grue, de l'engin de construction ou du chariot de manutention, **caractérisée en ce que** le dispositif terminal mobile is configuré :
- pour recevoir des données d'image depuis une caméra (220) et/ou des données numériques depuis une modélisation des informations de la construction (BIM)
- pour afficher une representation de l'environnement de la machine et/ou d'un outil de travail de la machine sur l'écran en référence aux données d'image reçues depuis la caméra (220) et/ou aux données numériques depuis une modélisation des informations de la construction (BIM) ; et
- pour afficher les moyens de saisie pour entrer les instructions de commande sur l'écran (4) au moins parfois simultanément à la représentation de l'environnement de la machine et/ou de l'outil de travail.

2. Dispositif de commande à distance selon la revendication précédente, dans lequel les moyens de saisie (13) pour entrer les instructions de commande sont fondus dans la représentation de l'environnement de la machine et/ou de l'outil de travail à la manière d'une représentation superposée ou sont affichés sur l'écran à la manière d'une fenêtre à côté de la représentation de l'environnement de la machine et/ou de l'outil de travail.

3. Dispositif de commande à distance selon l'une des revendications précédentes, dans lequel le dispositif terminal mobile (2) possède un module de simulation graphique pour calculer une représentation virtuelle de l'environnement de la machine et/ou des composants de la machine ; dans lequel le module de simulation graphique possède une interface de données pour importer les informations d'un bâtiment et/ou les informations d'un chantier de construction et possède un dispositif de traitement d'images pour générer et/ou adapter la représentation virtuelle de l'environnement de la machine en fonction des informations du chantier de construction et/ou informations du bâtiment importées, et dans lequel ladite interface de données est une interface CAD et le dispositif de traitement d'images est configuré pour générer et/ou adapter la représentation virtuelle de l'environnement de la machine en fonction des données CAD importées via l'interface CAD et/ou est une interface de données d'image et le dispositif de traitement d'images est configuré pour générer et/ou adapter une représentation virtuelle de l'environnement de la machine en fonction des données d'image, de préférence données d'image numérique, importées via l'interface de données d'image.

4. Dispositif de commande à distance selon l'une des revendications précédentes, dans lequel le dispositif terminal mobile (2) possède un appareil de contrôle de l'affichage pour générer une représentation superposée d'écran à la manière d'une image de réalité virtuelle sur l'écran qui est assemblée à partir des données d'image reçues de la caméra (220) et des données numériques reçues de la modélisation des informations de la construction (BIM) et, par conséquent, à partir d'une image caméra de l'environnement de la machine et à partir d'une représentation virtuelle de l'environnement de la machine et/ou d'un bâtiment.

5. Dispositif de commande à distance selon l'une des revendications précédentes, dans lequel au moins une caméra en direct (220) est prévue pour fournir une image en direct de l'outil de travail et/ou de l'environnement de la machine ; et dans lequel le dispositif terminal mobile (2) possède au moins un récepteur d'image pour recevoir l'image en direct de la caméra, laquelle image en directe est basée sur la représentation affichée sur l'écran, dans lequel
- l'au moins une caméra (220) est installée sur un drone aérien télécommandé (209) ; et la tablette électronique (3) possède des moyens de contrôle de position sous la forme de moyens d'affichage à écran tactile pour le contrôle à distance du drone aérien de telle sorte que différentes positions souhaitées par rapport à la machine et/ou à son outil de travail soient survolées par le drone aérien ; et/ou
- l'au moins une camera (220), pour fournir une image en direct de l'environnement de la machine, est installée sur la grue, sur la machine de construction, ou sur le chariot de manutention, en particulier dans la cabine d'un opérateur ayant une direction de vue au moins approximativement vers l'outil de travail ; dans lequel la tablette électronique (3) possède des moyens de contrôle de caméra sous la fome d'un moyen d'affichage à écran tactile pour le contrôle à distance de l'angle de vue et/ou du paramètre de zoom de la caméra.

6. Dispositif de commande à distance selon l'une des revendications précédentes, dans lequel la tablette électronique (3) est configurée
- pour afficher un menu de sélection de caméra pour sélectionner l'image caméra d'une des pluralité de caméras sur son écran (4) et pour afficher l'image de caméra après la sélection d'une caméra ; et/ou
- pour afficher un moyen de contrôle à écran tactile pour contrôler la distance focale et/ou le champ de vision d'une caméra.

7. Dispositif de commande à distance selon l'une des revendications précédentes, dans lequel la tablette électronique (3) est configurée
- pour afficher une représentation virtuelle de la structure selon un état réel déterminé et/ou une représentation virtuelle de la prochaine tâche à effectuer par la machine de construction sur l'écran de la tablette électronique en fonction des informations numériques de la modélisation des informations de la construction en fonction d'une phase de construction spécifique ; et/ou
- pour afficher une représentation virtuelle de l'élément de construction suivant à travailler et la position d'installation dudit élément de construction dans le bâtiment à l'écran de la tablette électronique en fonction des données numériques de la modélisation des informations de la construction (300).

8. Dispositif de commande à distance selon l'une des revendications précédentes, dans lequel la tablette électronique (3) est configurée
- pour modifier une fonction de délimitation de zone de travail prise en compte par l'appareil de contrôle de la machine de construction en fonction des informations numériques de la modélisation des informations de la construction ;
- pour dynamiquement afficher la délimitation de zone de travail modifiée dans la représentation de l'environnement de la machine sur l'écran ; et
- pour automatiquement mettre à jour et/ou pour automatiquement adapter de manière cyclique ou continue la function de délimitation de zone de travail en fonction de l'avancement de la construction du bâtiment à ériger et/ou à travailler tout en tenant compte des informations numériques de la modélisation des informations de la construction.

9. Dispositif de commande à distance selon l'une des revendications précédentes, dans lequel la tablette électronique (3) possède un module de configuration pour une sélection préconfigurée de l'un d'une pluralité de type de machines, en particulier un module de configuration pour adapter les moyens de saisie sous la forme d'un moyen d'affichage à écran tactile au type de machine sélectioné.

10. Dispositif de commande à distance selon l'une des revendications précédentes, dans lequel la tablette électronique (3) est configurée
- pour communiquer avec différentes machines à contrôler à distance sur un réseau ;
- pour afficher un menu de sélection pour sélectionner l'une d'une pluralité des machines qui sont connectées au réseau ; et
- pour envoyer les instructions de commande générées à la machine sélectionnée après avoir sélectionné l'une d'une pluralité des machines sur l'écran (4).

11. Dispositif de commande à distance selon l'une des revendications précédentes, dans lequel au moins un module électronique supplémentaire (11), séparé de la tablette électronique (3), est prévu pour entrer les instructions de commande et peut être porté et/ou fixé au corps de l'opérateur de la machine ; et dans lequel la tablette électronique (3) et l'au moins un module électronique supplémentaire (11) fournissent un chevauchement mutuel au moins partiel pour l'exécution des fonctions de commande de telle sorte qu'une commande de contrôle souhaitée par l'opérateur de la machine peut être saisie de manière sélective sur la tablette électronique (3) ou sur le module électronique supplémentaire (11).

12. Dispositif de commande à distance selon la revendication précédente, dans lequel ledit module électronique supplémentaire (11) est configuré comme une montre-bracelet (12) ou comme un ordinateur bracelet et possède un écran ayant une fonction d'écran tactile.

13. Dispositif de commande à distance selon l'une des revendications précédentes, dans lequel la tablette électronique (3) est configurée
- pour identifier une pièce de machine à régler ou à parcourir en pressant sur la représentation de la pièce de machine sur l'écran (4) de la tablette électronique (3) ;
- pour détecter un glissement et/ou un déplacement de l'élément d'image pressé sur l'écran (4) par rapport à la direction et/ou au degré et/ou à la vitesse du déplacement ; et
- pour générer une instruction de commande pour déplacer la pièce de machine indentifiée en fonction du glissement et/ou du déplacement détecté.

14. Dispositif de commande à distance selon l'une des revendications précédentes, dans lequel un appareil d'installation corporelle (5) est prévu pour installer la tablette électronique (3) sur le corps de l'opérateur de la machine ; dans lequel l'appareil d'installation corporelle (5) comprend un cadre de maintien (7) possédant des moyens de fixation pour fixer la tablette électronique (3) et comprend une sangle de transport (6) fixée au cadre de maintien (7) ; et dans lequel une entretoise (8) est attaché au cadre de maintien (7) pour ébraser la tablette électronique (3) devant l'estomac de l'opérateur de la machine.

15. Système comprenant un dispositif de commande à distance (1) qui est configuré selon l'une des revendications de 1 à 14; et une grue, un engin de chantier ou un chariot de manutention, dans lequel une connexion de communication via laquelle les instructions de commande saisies à la station de contrôle (2) du dispositif de commande à distance (1) peuvent être transmises au dispositif de contrôle de la grue, de l'engin de chantier et/ou du chariot de manutention est prévu entre la grue, l'engin de construction et/ou le chariot de manutention, d'une part, et le dispositif de commande à distance (1), d'autre part.
